# EUROPEAN PATENT APPLICATION

(11) **EP 3 561 156 A1**
(43) Date of publication of application: **30.10.2019**
(21) Application number: 17882717.6
(22) Date of filing: 22.12.2017
(51) Int. Cl.: C25D 3/56, C25D 5/50, C25D 7/06, C22C 18/00

(54) **ZN-NI ELECTROPLATED STEEL SHEET HAVING EXCELLENT CORROSION RESISTANCE AND FORMABILITY AND MANUFACTURING METHOD THEREFOR**

(30) Priority: 23.12.2016 KR 20160177938
(71) Applicant: Posco, Pohang-si, Gyeongsangbuk-do 37859 (KR)
(72) Inventor: KWON, Moon-Jae, Pohang-si Gyeongsangbuk-do 37877 (KR); KANG, Choon-Ho, Pohang-si Gyeongsangbuk-do 37877 (KR); KIM, Su-Young, Pohang-si Gyeongsangbuk-do 37877 (KR)
(74) Representative: Zech, Stefan Markus
(86) International application number: PCT/KR2017/015387
(87) International publication number: WO 2018/117751

(57) **Abstract**

The present invention relates to a Zn-Ni electroplated steel sheet having excellent corrosion resistance and formability and a manufacturing method therefor. One embodiment of the present invention provides a Zn-Ni electroplated steel sheet having excellent corrosion resistance and formability and a manufacturing method therefor, the steel sheet comprising: a base steel sheet; and a Zn-Ni plated layer formed on the base steel sheet, wherein a Ni alloying degree within the Zn-Ni plated layer is 7.5-14%, and the Ni amount is 40-50 atom% in a region within 1 µm toward the Zn-Ni plated layer from an interface of the base steel sheet and the Zn-Ni plated layer. According to the present invention, provided is a Zn-Ni electroplated steel sheet, which has superior corrosion resistance and formability despite having a relatively low nickel alloying degree, has excellent price competitiveness compared with that of a conventional Zn-Ni plated steel sheet and two-layer plated steel sheet, and can ensure high productivity.

## Description

### [Technical Field]

The present disclosure relates to a Zn-Ni electroplated steel sheet having excellent corrosion resistance and formability and a method of manufacturing the same.

### [Background Art]

A Zn-Ni plated steel sheet exhibits excellent corrosion resistance, as compared to a pure zinc plated steel sheet, by introducing nickel, an electrochemically stable element. However, a Zn-Ni plated steel sheet, manufactured through a conventional electroplating process, has higher residual stress than zinc and nickel parent metals due to a low process temperature. When a content of nickel in a plated layer is increased to improve corrosion resistance, residual stress may be rapidly increased to cause cracking of the plated layer, and hardness of the plated layer may be increased to deteriorate workability. In addition, a difference in potential between base steel and the Zn-Ni plated layer may be decreased to deteriorate sacrificial corrosion protection.

Various studies into improvement in corrosion resistance and workability (or corrosion resistance after working) of a Zn-Ni plated steel sheet have been conducted. One of the studies is Patent Document 1, which discloses a technology for adjusting a thickness ratio of two plated layers. According to Patent Document 1, a Zn-Ni alloy plated layer structure includes 'a first layer', having a relatively higher content of Ni at a side of a steel sheet, and 'a second layer' having a relatively lower content of Ni at a side of a surface. However, in the case of Zn-Ni double-layer plating, first and second plated layers are different in current density and plating time ratio, and thus, it is difficult to commercially use the Zn-Ni double-layer plating due to difficulty in increasing productivity.

Patent Document 2 discloses that a residual stress behavior, depending on a nickel alloying degree in a plated layer, was analyzed to reach the conclusion that a nickel alloying degree, simultaneously satisfying adhesion, low residual stress, and high ductility, is 6.5 to 9.5%. According to Patent Document 2, when the nickel alloying degree is greater than 9.5%, ductility is decreased and internal stress is rapidly increased, and thus, the ductility is decreased and the stress changes from a compressed state to a tensile state. However, research into the degree of a residual stress effect, depending on a nickel alloying degree, does not reflect residual stress characteristics under a corrosive environment of a prepared sample, for example, the degree of change in residual stress according to penetration of corrosion products into a plated layer depending on the degree of surface cracking occurring. Therefore, actual availability of the above research is low.
(Patent Document 1) Japanese Patent Laid-Open Publication No. 1996-165594
(Patent Document 2) U.S. Patent Publication No. 3,420,754

### [Disclosure]

### [Technical Problem]

An aspect of the present disclosure is to provide a Zn-Ni electroplated steel sheet having excellent corrosion resistance and workability and a method of manufacturing the same.

### [Technical Solution]

According to an aspect of the present disclosure, a Zn-Ni electroplated steel sheet, having excellent corrosion resistance and workability, includes a base steel sheet and a Zn-Ni plated layer formed on the base steel sheet. A Ni alloying degree in the Zn-Ni plated layer is 7.5 to 14%, and a content of Ni is 40 to 50 atom% in a region within 1 µm from a boundary of the base steel sheet and the Zn-Ni plated layer toward the Zn-Ni plated layer.

According to another aspect of the present disclosure, a method of manufacturing a Zn-Ni electroplated steel sheet, having excellent corrosion resistance and workability, includes preparing a base steel sheet and dipping the base steel sheet in a sulfuric acid bath, having a pH of 1 to 5, including a zinc sulfate heptaheptahydrate and a zinc sulfate heptahydrate, to form a Zn-Ni plated layer on the base steel sheet. A content of the zinc sulfate heptaheptahydrate is 45 to 93 g/L, and a ratio of the zinc sulfate heptahydrate and the zinc sulfate heptaheptahydrate is 0.4 to 1.4.

### [Advantageous Effects]

As described above, a Zn-Ni electroplated steel sheet according to the present disclosure may have excellent corrosion resistance and workability in spite of a relatively low nickel alloying degree as well as higher price competitiveness than a conventional Zn-Ni plated steel sheet and a conventional double-layer plated steel sheet, and may secure high productivity.

### [Best Mode for Invention]

Hereinafter, the present disclosure will be described.

A Zn-Ni alloy electroplated steel sheet according to the present disclosure include a base steel sheet and a Zn-Ni plated layer formed on the base steel sheet. In this case, an Ni alloying degree in the Zn-Ni plated layer may be, in detail, 7.5 to 14%. In the present disclosure, the Ni alloying degree may be controlled as described above to secure an electrochemically stable gamma (Ni₅Zn₂₁) single phase, allowing corrosion resistance to be improved. In a gamma single-phase region, an increase in the Ni alloying degree leads to a rapid increase in hardness of the plated layer. The rapid increase in hardness of the plated layer, caused by the increase in the Ni alloying degree in the gamma single-phase region, may result in a deterioration in workability and a change in residual stress before and after dipping in a sodium chloride solution or exposure to a corrosive environment such as a salt-spraying environment. Accordingly, an appropriate range of the Ni alloying degree needs to be set in consideration of the deterioration in workability and the change in residual stress. When the Ni alloying degree is less than 7.5%, a crystal phase such as an eta phase (the same crystal phase as pure zinc), a mixed phase of eta and gamma, or the like, may appear and cause deteriorated corrosion resistance, similar to that of pure zinc, or galvanic corrosion, caused by a potential difference between mixed phases, may be promoted to deteriorate corrosion resistance. When the Ni alloying degree is greater than 14%, a corrosion resistance improving effect may be insignificant while manufacturing costs may be increased, and hardness of a plated layer may be rapidly increased to deteriorate properties such as plating adhesion, workability, and corrosion resistance after working. Therefore, the Ni alloying degree may be, in detail, 7.5 to 14%. From the economic viewpoint, the Ni alloying degrees may be, in further detail, 9 to 12%.

In the Zn-Ni electroplated steel sheet, a content of Ni may be, in detail, 40 to 50 atom% (at%) in a region within 1 µm from a boundary between the base steel sheet and the Zn-Ni plated layer toward the Zn-Ni plated layer. Accordingly, a zinc hydroxide is formed on a surface of the steel sheet to be passivated when corrosion is in progress. As a result, a Ni- enriched layer may be formed to implement an effect of delaying dehydration from the zinc hydroxide to a zinc oxide having significantly high conductivity and, ultimately, corrosion resistance may be improved. When the content of Ni is less than 40 at%, it is difficult to delay dehydration to the zinc oxide, and thus, corrosion resistance may be deteriorated. When the content of Ni is greater than 50 at%, corrosion resistance may be deteriorated or cracking may occur at a boundary or an interfacial layer may be peeled in working due to the high content of Ni. In the region within 1 µm from the boundary between the base steel sheet and the Zn-Ni plated layer toward the Zn-Ni plated layer, the content of Ni may be, in detail, 42 to 46 at%.

An r value (a plastic strain ratio) and an n value (a work hardening coefficient) are indices used to predict deep-drawing formability and stretching formability, respectively. In the case of a material having a great r value, depth of a forming cup may be increased because thickness strain is less and cracking does not easily occur. Accordingly, when the two values are great, formability may be considered to be excellent. When the Ni alloying degree of the Zn-Ni alloy plated steel sheet is 10%, the Ni alloying degree exceeds 300 on the basis of Vickers hardness. Since plated layer cracking occurs in working, a distance between plated layers may be increased to facilitate penetration of carrion factors into the plated layer. Due to corrosion products generated by preferential dissolution of zinc, the plated layer cracking may be accelerated with an increase in time of exposure to a corrosive environment. Moreover, since an increase in the Ni alloying degree in the gamma single-phase region may lead to a rapid increase in hardness of a plated layer, it may be vulnerable to occurrence of plated layer cracking in working. In the present disclosure, to predict workability of the Zn-Ni plated steel sheet, a variation in the r value depending on a coating amount of another surface was confirmed to reach the conclusion that an increase in the coating amount was related to a decrease in the r value. In view of the conclusion, optimization was made with respect to a coating amount on the other surface, required to have a relatively high level of corrosion resistance, and a coating amount of another surface required to have a relatively low level of corrosion resistance.

To this end, in the Zn-Ni electroplated steel sheet according to the present disclosure, a coating weight of a Zn-Ni plated layer, formed on one surface of the base steel sheet, may be, in detail, 20 to 50 g/m², and a coating weight of a Zn-Ni plated layer, formed on another surface of the base steel sheet may be, in detail, 0.25 to 0.8 times that of the coating weight of the Zn-Ni plated layer formed on one surface of the base steel sheet. When the coating weight of the Zn-Ni plating layer, formed on one side of the base steel sheet, is less than 20 g/m², corrosion resistance may be lowered and it may be vulnerable to an external damage such as scratch or the like. When the coating weight of the Zn-Ni plating layer, formed on one side of the base steel sheet, is greater than 50 g/m², manufacturing costs may be increased, occurrence of cracking may be intensified, and a corrosion resistance improving effect may be minimla. When the coating weight of the Zn-Ni plated layer, formed on the other surface of the base steel sheet, is less than 0.25 times that of the coating weight of the Zn-Ni plated layer formed on one surface of the base steel sheet, the corrosion resistance may be lowered and it may be difficult to control the coating amount. When the coating weight of the Zn-Ni plated layer, formed on the other surface of the base steel sheet, is greater than 0.8 times that of the coating weight of the Zn-Ni plated layer formed on one surface of the base steel sheet, a workability or formability improving effect may not be cost-effective.

The above-described Zn-Ni electroplated steel sheet according to the present disclosure may reduce a corrosion rate of Zn, having high electrochemical reactivity which is most important in a Zn-based alloy plated steel sheet, and may maintain sacrificial corrosion protection to base steel even under a corrosive environment condition. In addition, from the viewpoint of workability, a deterioration in a material after working and a deterioration in properties, caused thereby, may be significantly reduced.

Hereinafter, a manufacturing method according to the present disclosure will be described in detail.

First, a base steel sheet is prepared. Surface cleanliness of the base steel sheet may be secured by a pretreatment process such as degreasing or pickling, and conditions of the pretreatment process are not limited in the present disclosure.

The prepared base steel sheet is dipped in a sulfuric acid bath, having a pH of 1 to 5, to form a Zn-Ni plated layer on the base steel sheet. Typically, an acid bath has higher current efficiency than an alkaline bath due to high electrical conductivity, and exhibits a non-uniform alloying element distribution in a thickness direction in a normal current density range. For example, a Zn-Ni alloy plated steel sheet, manufactured under acidic conditions, exhibits a distribution in which a content of Ni is increased as proceeding from a surface of a Zn-Ni plated layer to a boundary between a base steel sheet and the Zn-Ni plated layer. A Zn-Ni alloy electroplated steel sheet may be allowed to inhibit corrosion by forming a Ni-enriched layer when corrosion is in progress. In the case of an acidic bath, a concentration of Ni is relatively high at a boundary between base steel and a plated layer, contributing to strengthening of the Ni-enriched layer, a corrosion resistance strengthening mechanism of the Zn-Ni plated steel sheet. When the sulfuric acid bath has a pH less than 1, an amount of hydrogen generated may be excessive when an operation time has passed, being vulnerable to hydrogen embrittlement. When the sulfuric acid bath has a pH greater than 5, a distribution, in which a content of Ni increases as proceeding from a surface of the plated layer to a boundary between the base steel sheet and the Zn-Ni plated layer, is insignificant. For example, an effect of forming a Ni-enriched layer at the boundary between the base steel sheet and the Zn-Ni plated layer may be insignificant and it may be disadvantageous in improving corrosion resistance. In addition, since a dissolution rate of a zinc sulfate heptaheptahydrate is low, it may be difficult to secure a target Ni alloying degree and productivity may be lowered. The sulfuric acid bath may have a pH ranging, in detail, from 1.5 to 3.

The sulfuric acid bath may include, in detail, a zinc sulfate heptaheptahydrate and a zinc sulfate heptahydrate. A content of zinc sulfate heptaheptahydrate may be, in detail, 45 to 93 g/L. When the content of the zinc sulfate heptaheptahydrate is less than 45 g/L, the Ni alloying degree is low, and thus, the corrosion resistance may be deteriorated. When the content of the zinc sulfate heptaheptahydrate is greater than 93 g/L, the Ni alloying degree is higher than a target value, and thus, the manufacturing costs may be increased. To secure a target value of 7.5 to 14% of the Ni alloying degree, a concentration ratio between the zinc sulfate heptahydrate and the zinc sulfate heptaheptahydrate is required to have a range from 0.4 to 1.4. The sulfuric acid bath may include sodium sulfate (Na₂SO₄) to adjust conductivity of a plating solution.

In an operation of forming the plated layer, a coating weight of the Zn-Ni on one surface of the base steel sheet may be, in detail, 20 to 50 g/m², and a coating weight thereof on the other surface of the base steel sheet may be, in detail, 0.25 to 0.8 times that of the coating amount of Zn-Ni on one surface of the base steel sheet. As described above, the coating weights may be controlled to implement a workability improving effect. Plated layers, having different coating weights, on both surfaces of a plated layer may be formed by, for example, a method which includes placing a base steel sheet on a cathode of a vertical plating cell type electroplating simulator, circulating a plating solution to form a Zn-Ni plated layer on one surface, and forming an Zn-Ni plated layer on the other surface in the same manner as described above. The coating weight of the Zn-Ni coated on one surface of the base steel sheet may be, in further detail, 20 to 40 g/m², and the coating weight of Zn-Ni coated on the other surface o the base steel sheet may be, in further detail, 0.45 to 0.7 times that of the coating amount of Zn-Ni coated on one surface of the base steel sheet.

After the operation of forming the plated layer, the method may further include heating the steel sheet to 190 to 260°C on the basis of a peak metal temperature (PMT). In consideration of vulnerability to generation of residual stress caused by a low process temperature due to characteristics of the electroplating, residual stress may be relieved through the additional heating process after the electroplating process and crystallinity of a gamma phase, required to improve corrosion resistance, may be improved. When the heating temperature is lower than 190°C, it may be difficult to achieve the above effects due to insufficient quantity of heat supplied to the steel sheet. When the heating temperature is higher than 260°C, improvements in effects such as relaxation of the residual stress and the crystallinity of the gamma phase may be insignificant and yellowing may occur on a surface of the steel sheet due to high-temperature heating. The heating temperature may be, in detail, 210 to 245°C.

The heating may be performed using induction (induction heating) hardening, in which a steel sheet itself is rapidly heated under an induced magnetic field, or hot-air hardening in which a steel sheet is slowly heated by convection current. Since the induction hardening has higher heating efficiency than the hot-air hardening, in further detail, the induction hardening may be used to thermally treat the Zn-Ni plated steel sheet.

### [Mode for Invention]

In the description below, an example embodiment of the present disclosure will be described in greater detail. It should be noted that the example embodiment is provided to describe the present disclosure in greater detail, and to not limit the present disclosure. The scope of right of the present disclosure may be determined based on the matters recited in the claims and the matters rationally inferred therefrom.

### (Embodiment)

After degreasing and pickling a base steel sheet (extremely low carbon steel) having a thickness of 0.8 mm, a width of 140 mm and a length of 250 mm, the base steel was electroplated and thermally treated under conditions, listed in Table 1, to form a Zn-Ni plated layer on the steel sheet. In this case, a Zn-Ni plated layer was formed on one surface of the base steel sheet by placing the base steel sheet on a cathode of a vertical plating cell type electroplating simulator and circulating a plating solution. Then, a Zn-Ni plated layer was formed on the other surface of the base steel sheet in the same manner as described above. Thus, coating weights on both surfaces of the base steel sheet were controlled to be different from each other. When the plated layer was formed, current density was 100 A/dm², a flow rate was 1.5 m/s, and a sulfuric acid bath included 30 g/L of sodium sulfate. The heating treatment was performed using an induction hardening apparatus.

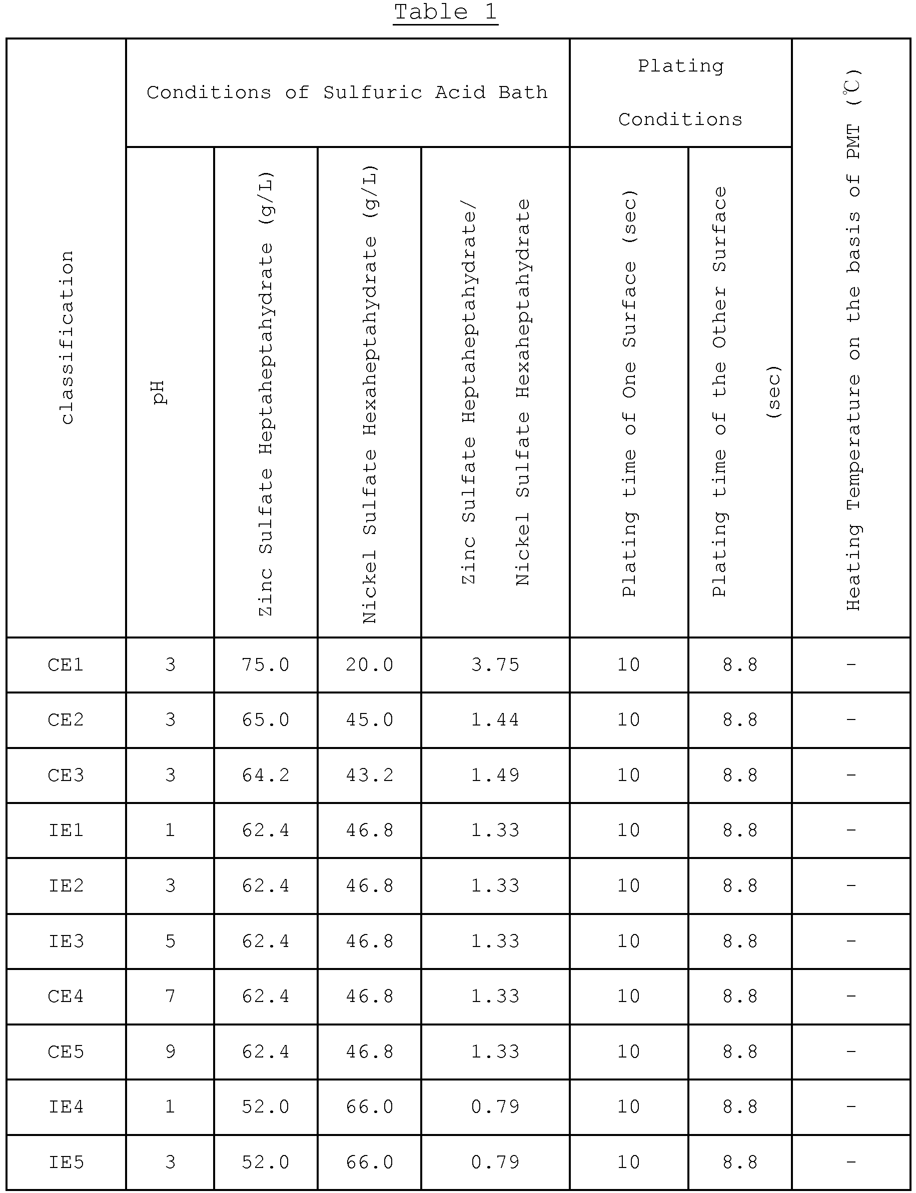

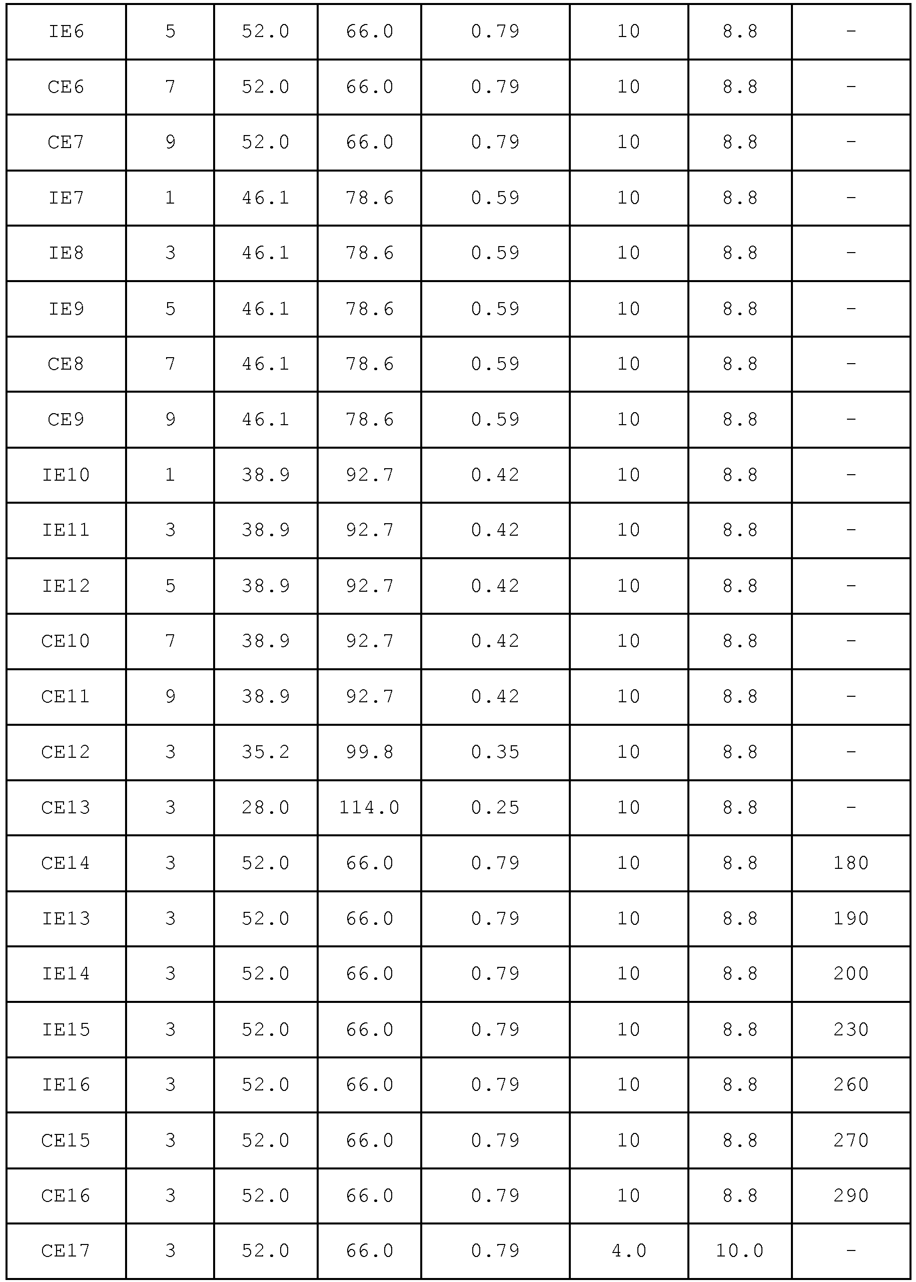

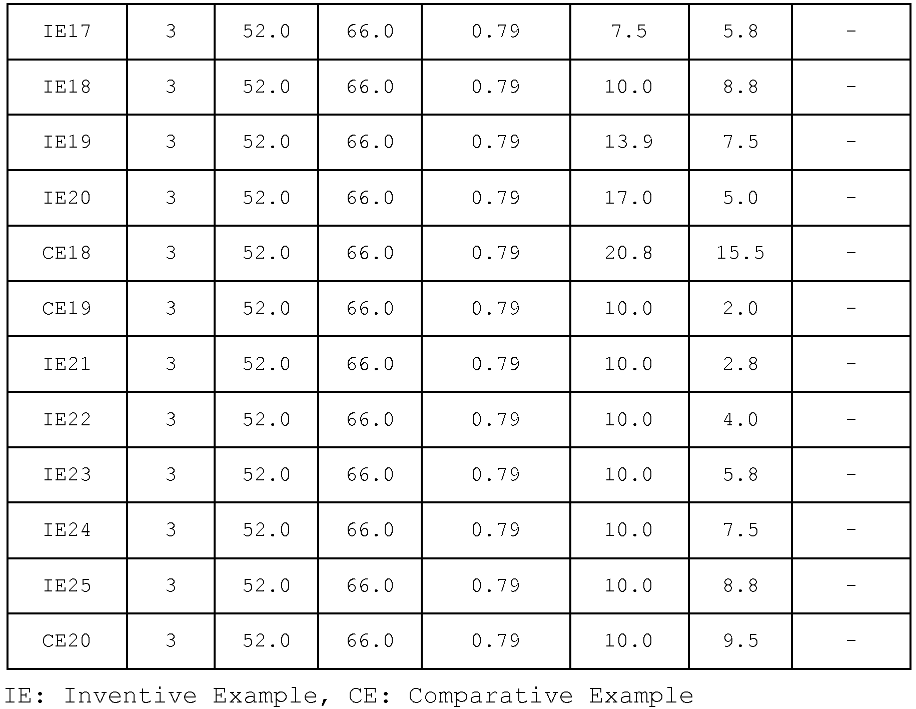

For the Zn-Ni electroplated steel sheet manufactured as described above, an alloying degree of the Zn-Ni plated layer, a content of NI in a region within 1 µm from a boundary between base steel sheet and Zn-Ni plated layer toward the Zn-Ni plated layer, a coating weight, corrosion resistance, and workability were measured, and results thereof are listed in Table 2.

In the corrosion resistance, a fraction of red rust occurring was measured by cutting a sample into a size of 75×150 mm, masking edges of the cut sample with a Teflon tape (Nitto Denko Corp., NITOFLON, No. 903UL), and putting the sample in a salt spraying tester STP-200 (SUGA Test Instruments Co., Ltd., Japan) to be left based on Japan Industrial Standards (JIS) Z 2371 (5% of sodium chloride, 1 to 2 ml of spraying time per hour, and a chamber temperature of 35°C) . The fraction was evaluated to be ⊚ (significantly excellent) when 0 to 10%, to be o (excellent) when more than 10% to 40%, to be Δ (normal) when more than 40% to 70%, and to be × (poor) when more than 70%.

In the corrosion resistance, sacrificial corrosion protection was measured by cutting a sample into a size of 20×20 mm and dipping the cut sample in 3.5% of a sodium chloride at a temperature of 30°C to evaluate corrosion potential using a potentiostat. 273A model (EG & G Princeton Applied Research, US), equipped with 352 SoftCorr III used as corrosion measurement software, was used a potentiostat apparatus. In this case, a saturated calomel electrode (SCE) and a high-density carbon electrode were used as a reference electrode and a counter electrode, respectively. A scanning rate was 0.333 mV/s, and the corrosion potential was derived by means of Tafel extrapolation. Electrochemical stability, for example, sacrificial corrosion protection was compared by comparing corrosion potentials under respective conditions based on a point of time at which 72 hours have passed since the dipping time. The sacrificial corrosion protection was evaluated to be o (excellent) when the corrosion potential was lower than that of the base steel, to be Δ (normal) when the corrosion potential was equal to that of the base steel, and to be × (poor) when the corrosion potential was higher than that of the base steel.

In the workability, powdering resistance was measured by cutting a sample into a size of 50×100 mm, attaching a Nichiban tape, Nichiban CT-24, to a surface of the sample, placing the sample on a V block and pressing a center of the sample using a pressing device such that a load is applied thereto to have a bending angle of 60 degrees, and removing the tape from the sample, after the test was finished, to determine whether the plated layer was peeled off. The powdering was evaluated to be o (excellent) when the plated layer was not peeled off and to be × (poor) when the plated layer was peeled off.

In the workability, the tensile r-value was calculated in an elongation section of 10 to 15% by working a sample based on JIS 13B standard and testing the sample using a tensile tester, Instron 5582 (Instron Inc., USA), at a room temperature and at a tensile rate of 10 mm per minute. In the case in which a heating treatment was performed, the tensile r-value was evaluated to be ⊚ (significantly excellent) when the calculated tensile r-value was improved by more than 60% as compared to a tensile r-value of an unheated sample, a reference sample, to be o (excellent) when the calculated tensile r-value was improved by more than 30% to 60% as compared to the tensile r-value of the reference sample, and to be × (poor) when the calculated tensile r-value was improved by less than 0% as compared to the tensile r-value of the reference sample (poor as compared to the reference sample). In the case in which coating weights on both surfaces of a steel sheet were different from each other, the tensile r-value was evaluated to be ⊚ (significantly excellent) when the calculated tensile r-value was improved by more than 20% as compared to a tensile r-value of a sample, in which coating weights on both surfaces had the same value of 30 g/m², a reference sample, to be o (excellent) when the calculated tensile r-value was improved by more than 5% to 20% as compared to the tensile r-value of the reference sample, to be Δ (normal) when the calculated tensile r-value was improved by 0% to 5% as compared to the tensile r-value of the reference sample, and to be × (poor) when the calculated tensile r-value was improved by less than 0% (poor as compared to the sample in which coating weights on both surfaces had the same value of 30 g/m²).

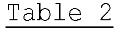

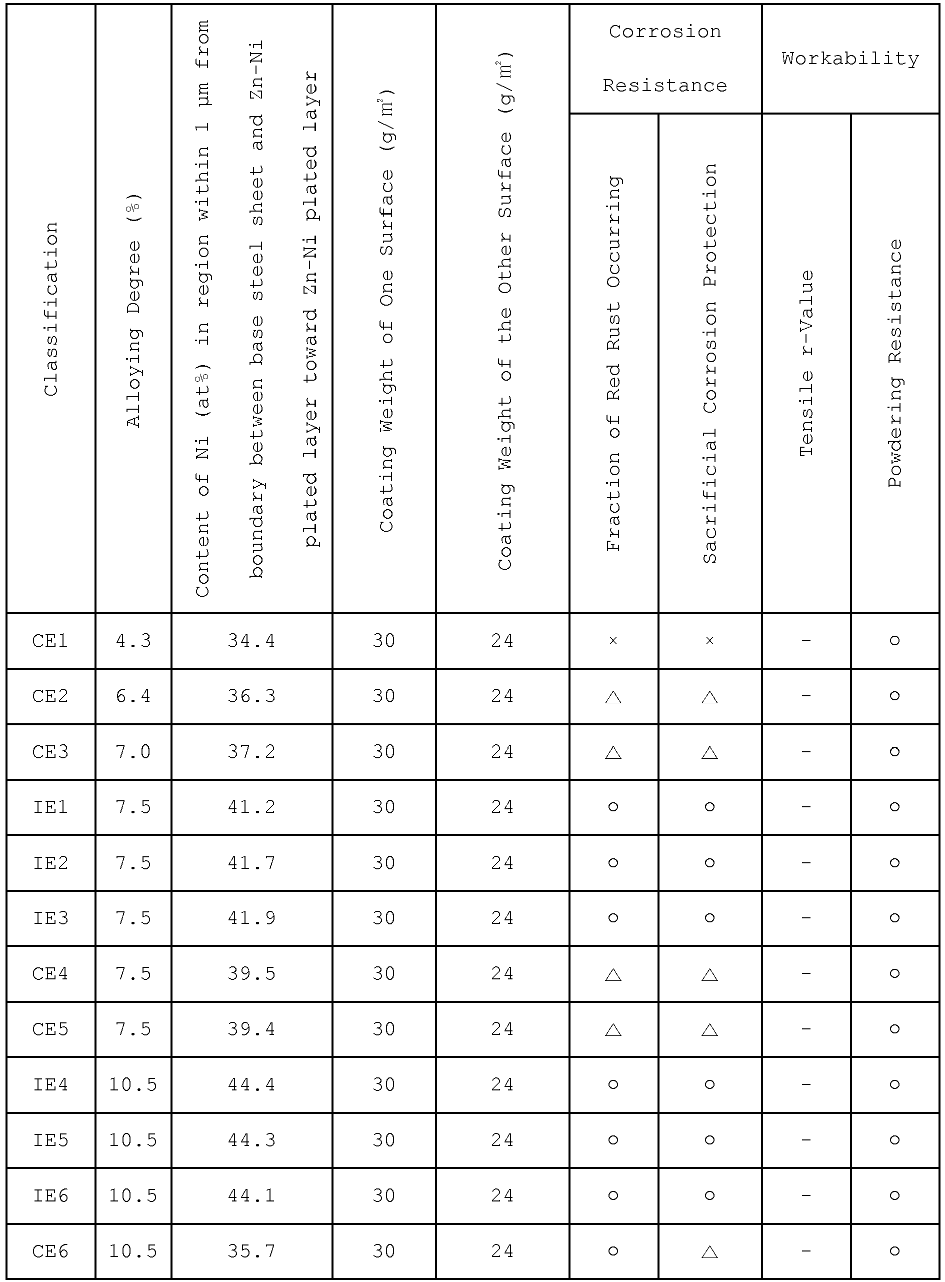

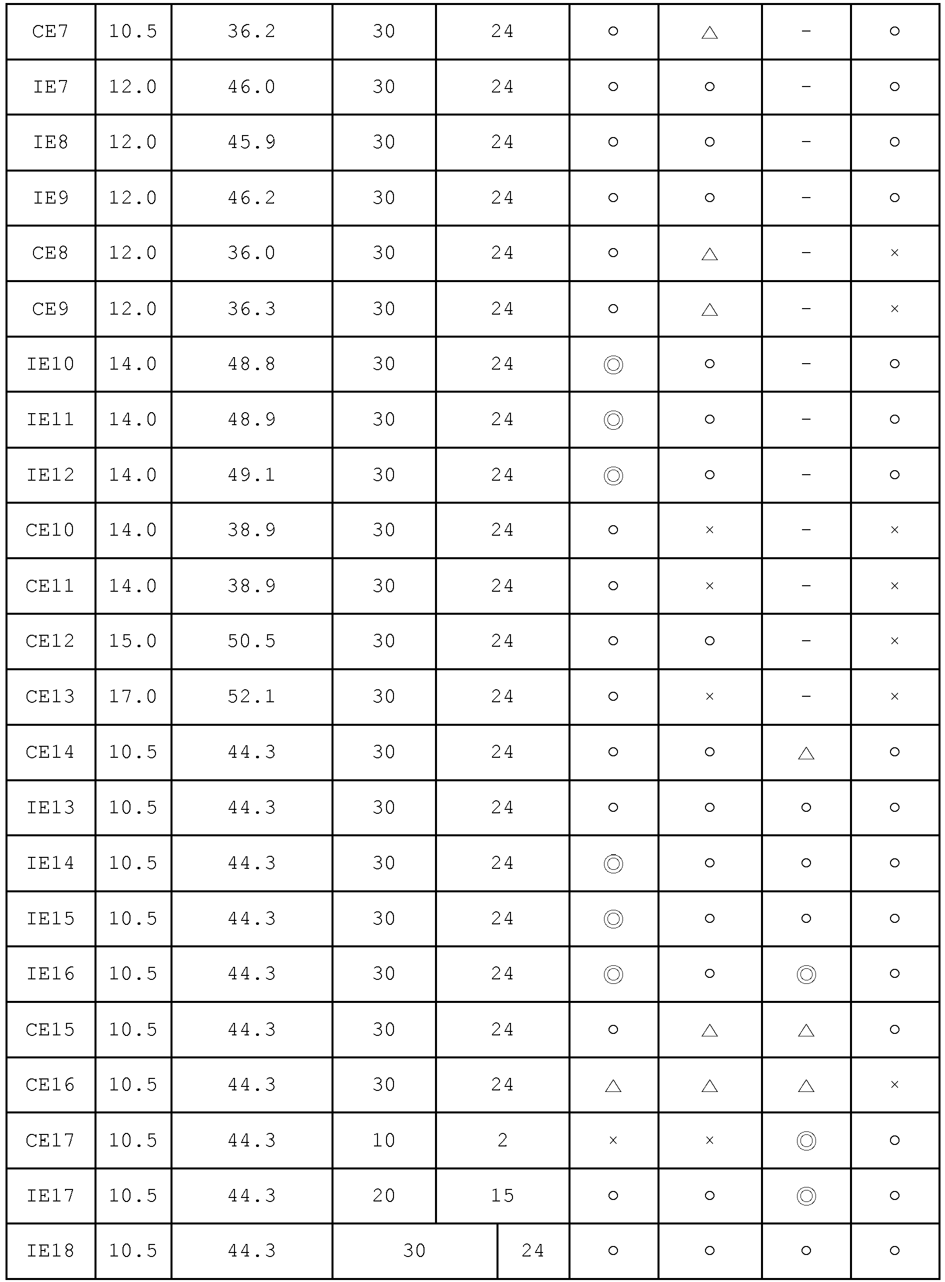

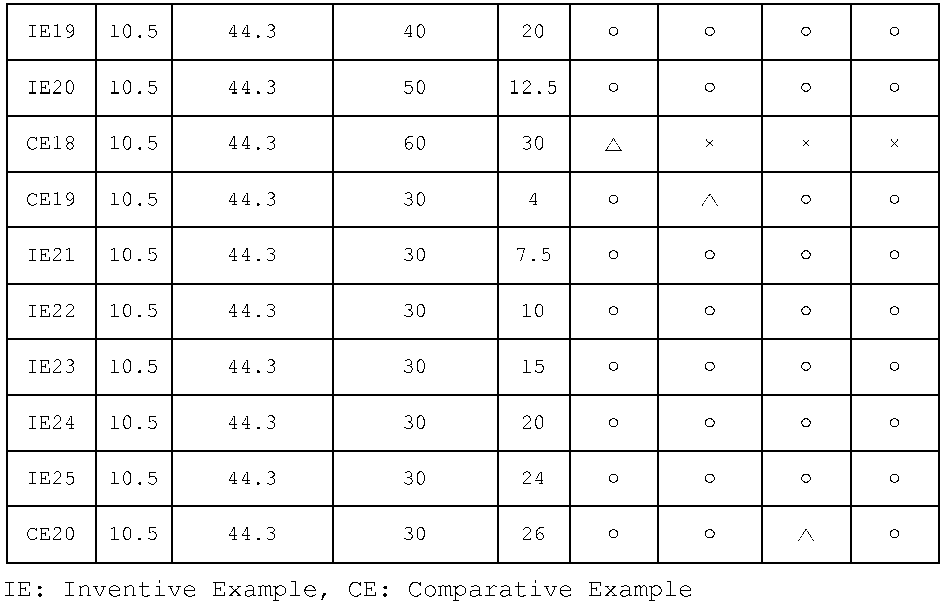

As can be seen from Tables 1 and 2, Inventive Examples 1 to 25, satisfying the conditions proposed by the present disclosure, had excellent corrosion resistance (fraction of red rust occurring and sacrificial corrosion protection) and excellent workability (tensile r-value and powdering resistance).

Since Comparative Examples 1 to 13 did not satisfy the sulfuric acid bath conditions proposed by the present disclosure, they did not satisfy the condition such as a Ni alloying degree in an Zn-Ni plated layer, or a content of Ni in a region within 1 µm from a boundary between a base steel sheet and the Zn-Ni plated layer toward the Zn-Ni plated layer, and thus, did not secure excellent levels of corrosion resistance and workability.

Since Comparative Examples 14 to 16 did not the heating conditions proposed by the present disclosure, they did not simultaneously secure excellent levels of corrosion resistance and workability.

Since Comparative Examples 17 to 20 did not satisfy coating weight conditions proposed by the present disclosure, they did not secure excellent levels of corrosion resistance and workability.

## Claims

1. A Zn-Ni electroplated steel sheet having excellent corrosion resistance and workability, the Zn-Ni electroplated steel sheet comprising:
a base steel sheet; and
a Zn-Ni plated layer formed on the base steel sheet,
wherein a Ni alloying degree in the Zn-Ni plated layer is 7.5 to 14%, and
a content of Ni is 40 to 50 atom% in a region within 1 µm from a boundary of the base steel sheet and the Zn-Ni plated layer toward the Zn-Ni plated layer.

2. The electroplated steel sheet of claim 1, wherein a coating weight of the Zn-Ni plated layer, formed on one surface of the base steel sheet, is 20 to 50g/m², and
a coating weight of the Zn-Ni plated layer, formed on the other surface of the base steel sheet, is 0.25 to 0.8 times that of the coating weight of the Zn-Ni plated layer formed on one surface of the base steel sheet.

3. A method of manufacturing a Zn-Ni electroplated steel sheet having excellent corrosion resistance and workability, the method comprising:
preparing a base steel sheet; and
dipping the base steel sheet in a sulfuric acid bath, having a pH of 1 to 5, including a zinc sulfate heptaheptahydrate and a zinc sulfate heptahydrate, to form a Zn-Ni plated layer on the base steel sheet,
wherein a content of the zinc sulfate heptaheptahydrate is 45 to 93 g/L, and
a ratio of the zinc sulfate heptahydrate and the zinc sulfate heptaheptahydrate is 0.4 to 1.4.

4. The method of claim 3, wherein in the forming the Zn-Ni plated layer,
a coating weight of the Zn-Ni plated layer, coated on one surface of the base steel sheet, is 20 to 50g/m², and
a coating weight of the Zn-Ni plated layer, coated on the other surface of the base steel sheet, is 0.25 to 0.8 times that of the coating weight of the Zn-Ni plated layer coated on one surface of the base steel sheet.

5. The method of claim 3, after the forming of the plated layer, further comprising:
heating the steel sheet to 190 to 260°C on the basis of a peak metal temperature (PMT).

6. The method of claim 5, wherein the heating is performed using induction hardening or hot-air hardening.
